# EUROPEAN PATENT APPLICATION

(11) **EP 2 722 612 A1**
(43) Date of publication of application: **23.04.2014**
(21) Application number: 12800248.2
(22) Date of filing: 15.06.2012
(51) Int. Cl.: F24J 2/48, F24J 2/46, C23C 28/00

(54) **COVERING THAT SELECTIVELY ABSORBS VISIBLE AND INFRARED RADIATION, AND METHOD FOR THE PRODUCTION THEREOF**

(30) Priority: 16.06.2011 ES
(71) Applicant: Consejo Superior De Investigaciones Científicas (CSIC), 28006 Madrid (ES)
(72) Inventor: CÉSPEDES MONTOYA, Eva Maria, E-28049 Madrid (ES); PRIETO DE CASTRO, Carlos Andrés, E-28049 Madrid (ES); ESCOBAR GALINDO, Ramón, E-28049 Madrid (ES); SÁNCHEZ GARCÍA, José Angel, E-28049 Madrid (ES)
(74) Representative: Ungria López, Javier
(86) International application number: PCT/ES2012/070444
(87) International publication number: WO 2012/172148

(57) **Abstract**

The present invention relates to a coating that selectively absorbs visible and infrared radiation, which comprises: (a) a first anti-diffusion barrier layer (2); (b) an IR-reflecting metallic layer (3) made from at least one metallic element selected from a group comprising An, Ag, Al, Cu, Ti and Pt; (c) at least a second anti-diffusion barrier layer (4) formed by oxidation of the layer (3); (d) a structure that absorbs in the UV-VIS range, which comprises at least a first film (5) and a second film (6) made from cermet, which in turn comprises a metallic fraction made from a metal selected from Pt, Cr, Mo, W, Zr, Nb, Ta and Pd, or any alloy thereof, and a ceramic comprising an oxygen-free nitride which is constituted by a metallic oxide in which the metal is selected from aluminium, silicon and chromium; and (e) a dielectric layer that is non-reflecting in the UV-VIS range, which comprises a nitride of at least one metal selected from silicon, aluminium and chromium. A further subject matter of the invention is the method for producing said coating and the use thereof in thermal solar energy collectors.

## Description

### TECHNICAL FIELD OF THE INVENTION

The present invention falls within the sector in which energy is produced by means of thermal solar power stations. It refers, more specifically, to a coating which is especially suitable for use in steel and glass tubes used in thermal solar energy collectors. As a result of the properties of the coating, the efficiency in collecting solar energy is improved, maximising the capture of visible light and minimising heat emission in the tubes containing the heat transfer fluid, up to the turbine in the thermal power station.

Therefore, the present invention aims to provide a complete composition and structure for a coating that absorbs solar energy, which has been improved in that the heat radiation emissions have been lowered (by over approximately 1000 nm), operating in the medium-high temperature range (100°C - 600°C). The invention also refers to the production method for said coating, as well as the use thereof to selectively absorb solar energy.

### STATE OF THE ART

The development of selective coatings aimed at increasing the efficiency of thermal solar collectors has been researched for several years. The prime characteristics ideally consist of completely absorbing the solar radiation reaching the ground surface (ultraviolet-visible - UV-VIS - range) or, equally, not reflecting visible light, also being characterised in the opacity relative to the radiation emitted by the heated body (referred to as black body radiation, located in the infrared - IR -range), i.e. reflecting infrared light. It must be noted that simultaneously optimising these two concepts is only possible owing to the fact that the absorption and emission effects are produced in different wavelengths, which is why a coating with the most abrupt transition between the UV-VIS and IR spectra possible is required.

The selective coatings may be used either in collectors located in the open air for domestic applications wherein a temperature of around 100°C is reached or in collectors located in a vacuum for applications in which electric energy is generated. The latter are carried out at high temperatures (of at least 400 °C), which is why the coating plays a decisive role in the balance between the energy reaching the collector and that which the collector is capable of deriving benefit from.

Typically, in this kind of collector for generating energy, a tube is heated up, through which a heat transfer liquid flows, which is finally responsible for transforming the thermal energy into mechanical energy and into electric energy by means of a turbine. The output of this conversion is greater at higher temperatures, which, in addition to the concentration of solar radiation on the tubes by means of parabolic mirrors, implies that an excellent balance between the energy collected and emitted at the operational temperature must be found. This is achieved by means of depositing the selective coatings, which are capable of maintaining their properties at the desired operation temperature, thus making the chemical stability of the structure that forms the coating highly important.

For this application, various alternatives have been described as far as the nature of the coatings is concerned. The different kinds of coating make it possible to select one depending on the specific requirements of each application. In addition to economic factors, choosing the coating is determined by the physical magnitudes characteristic of the same, evaluated at the operational temperature. Nevertheless, owing to the oxidation processes, the coatings often deteriorate at temperatures of over 500°C.

On the other hand, faced with the impossible task of producing an ideal coating that absorbs 100% of the incident radiation and emits 0% of the heat generated, two magnitudes referred to as absorptivity (α) and emissivity (ε) are defined in order to evaluate the efficiency of the selective absorbing coatings. These magnitudes may be understood as the percentage of radiation absorbed relative to the incident radiation and the percentage of infrared radiation emitted relative to an ideal emitter. Specifically, α is defined as the relationship between the energy reaching the tube relative to that which reaches the surface of the coating and ε is defined as the relationship between the energy emitted by the collector tube at the operational temperature relative to the energy emitted by an ideal emitter body at the same temperature. Given all of the above, a coating would be much more effective the higher the α and the lower the ε are. It is important to bear in mind that the efficiency of the electric energy generation increases with the operational temperature of the solar collectors, which is why the selective coating should have useful α and ε values, without deteriorating at high temperatures. ε is particularly significant in applications at high temperatures, given that the emission losses increase with the fourth power of the absolute temperature.

Background documents on selective absorbing coatings exist, amongst which it is worth highlighting the inventions described in patents US2008/0121225 (ES2317796A1) or ES2316321 B2. In these documents, the selective absorbing coating is formed by a metallic layer, which provides the characteristics of low emissivity in the IR range, one or various layers of ceramic materials, provided with metallic elements or "cermets", which act as absorbent layers for solar radiation and a layer of ceramic material which acts as an anti-reflecting layer. Whilst all of them report highly acceptably absorptivity values, this was not the case as far as the emissivity values thereof were concerned, giving rise to a selectivity relationship of α /ε ≤ 10.

A high number of selective coatings which use cermets formed by one of the following metals: Cu, Ni, Co, Pt, Cr, Mo, W, Al or Ag have been described, in addition to the following compounds as a ceramic matrix: SiO, SiO₂, Al₂O₃, AlN or MgO. In order to make these cermets more effective, they should be covered with a layer of a material with very good transparent qualities, for example the following oxides: Cr₂O₃, MoO₃, WO_{X}, HfO_{X} or SiO₂, wherein said layer acts as an anti-reflecting layer. In addition, the cermet should be deposited on a metal which acts as an efficient infrared mirror, which is usually achieved with Ag, Cu, Al, Au or Pt.

One of the latest patents referring to coatings for high temperature applications (US2008/0121225) is formed by a double cermet made of oxides such as Mo-Al₂O₃. In this way, the complete coating formed by a silver IR reflector, an absorbent formed by two layers of Mo:Al₂O₃- each one of which has a different Mo concentration - and an anti-reflecting layer formed by SiO₂, has values of α = 0.96 and ε = 0.1 at a temperature of 550°C. This equates to a selectivity relationship of α/ε = 9.6, upon which the level of benefit derived from the energy reaching the tube eventually depends.

Another current solution (ES 2316321) is based on cermets formed by Mo-SiAlOₓ and Ni-SiAlOₓ, deposited by means of sputtering, with results showing values of α/ε_{400°C} = 0.975/0.15 and α/ε_{400°C} = 0.975/0.08, respectively, at 400°C, a number of selectivity relationships of α/ε = 6.5 and α/ε = 12.2 thereby being obtained at 400°C. This patent also includes the use of cermets formed by oxynitrides.

### BRIEF DESCRIPTION OF THE INVENTION

The object of the present invention consists of a new coating that selectively absorbs visible and infrared radiation (VIS-IR), with good absorptivity properties and most importantly, low emissivity. These improved properties to be operated at medium and high temperatures make it possible for the coating, object of the present invention, to be applied, amongst other possibilities, to the heat absorbing tubes that form part of the parabolic collectors of the thermal solar power stations.

This coating consists of a compound material (referred to as CERMET), characterised in that it comprises at least one metal, selected from a group formed by Pt, Cr, Mo, W, Zr, Nb, Ta and Pd or any alloy thereof and a ceramic which comprises an oxygen-free nitride of at least one metal selected from a group formed by silicon, aluminium and chromium, as well as any combination thereof. Said coating is characterised in that it is particularly effective when placed on a metallic layer which reflects IR and is comprised between two barrier layers.

Said metallic layer which reflects IR is particularly effective when it is formed by Ag, Au, Al, Cu, Ti or Pt and it is found on a first barrier layer, created by oxidising the surface layer of the substrate, upon which the coating is deposited and below a second anti-diffusion barrier layer created by means of surface oxidation or passivation of the Ag, Au, Al, Cu, Ti or Pt layer.

Combining both characteristics, namely the cermet formed by an oxygen-free nitride and the second anti-diffusion barrier layer formed by an oxide, facilitates chemical stability in the coating at very high temperatures. This is such given that this barrier prevents the IR reflecting layer and the cermet from deteriorating. It must be emphasised that this characteristic is only possible when the barrier layer is formed by an oxide and the cermet by an oxygen-free nitride, in such a way that there is no oxygen source within the coating itself.

In a preferred embodiment of the invention, wherein the substrate is metallic, the oxidation of the surface layer of the same may preferably consist in thermal oxidation.

Preferably, the substrate upon which the coating is deposited may be made of glass, ceramic or metal, selected from any kind of steel, copper, zinc and aluminium or any alloy thereof.

The coating is also particularly effective when placed between the IR reflecting metallic layer and under another anti-reflecting layer formed by at least one nitride of at least one metal, selected from silicon, aluminium and chromium, in addition to any combination thereof.

In these conditions, using the coating object of the present invention, it is possible to obtain α values of between 0.90 and 0.93 and ε values of between 0.03 and 0.06, which results in an α/ε relationship of between 15 and 31, clearly better than in those cases previously described in the prior state of the art.

In addition, said coating is capable of supporting vacuum thermal treatments at temperatures of up to 600°C or thermal treatments in the open air of up to 300°C, without any kind of deterioration being observed. After having been treated at 600°C, the samples presented α values of between 0.90 and 0.93 and ε values of between 0.03 and 0.06, which represents a great improvement in comparison to those coatings currently in use.

This stability at high temperatures makes it possible to use the coating described herein in tubes containing heat transfer fluids at temperatures of over 400°C, such as oils currently used, as well as molten salts that may operate at higher temperatures. In order to use the coating at these temperatures, it is possible to calculate the corresponding emissivity ε, which gives rise to values of ε_{400°C} of between 0.03 and 0.07 and ε_{600°C} of between 0.04 and 0.10.

The barrier layer created by the surface oxidation of the IR reflecting metallic layer is particularly important in obtaining low emissivity values. It should be continuous and homogenous in thickness. In addition, in order to prevent subsequent deterioration of the IR mirror, no other oxygen reserve should exist within the coating itself, which acts as an oxidising agent at high temperatures. In this sense, the fact that the cermet which absorbs solar radiation does not contain oxygen is highly convenient. Therefore, the use of oxides and oxynitrides is likely to reduce the efficacy of the IR mirror.

The IR reflecting metallic layer is preferably between 10 nm and 500 nm thick and more preferably between 100 nm and 250 nm thick.

In order to obtain good absorptivity and emissivity values, an absorbent layer in the UV-VIS range, formed by at least one metal selected from a group consisting of Pt, Cr, Mo, W, Zr, Nb, Ta and Pd or any alloy thereof is highly suitable, in addition to by a ceramic comprising a nitride of at least one metal selected from a group consisting of silicon, aluminium and chromium, as well as any combination thereof. In a specific embodiment wherein the metal is molybdenum and the nitride is silicon nitride, the total thickness of the absorbent layer is comprised between 10 and 500 nm, a thickness of between 20 and 100 nm being preferable. In a preferred embodiment of the invention, said absorbent layer may comprise at least two films with differing metal contents.

With the aim of preserving the metallic character of the metal that forms the cermet, it is preferable for each one of these films to have a multi-layer structure, so that the metal and ceramic are preferably deposited sequentially, this process being repeated until the desired thickness is achieved.

A method for obtaining the coating described above also forms an object of the present invention. In general, this method comprises: (a) obtaining at least one first anti-diffusion barrier layer, by means of oxidising the surface layer of the substrate upon which the coating is deposited; (b) depositing an IR reflecting metallic layer on said first anti-diffusion barrier layer, where said IR reflecting metallic layer comprises at least one metallic element selected from a group formed by Au, Ag, Al, Cu, Ti and Pt, in addition to any combination thereof; (c) obtaining at least a second anti-diffusion barrier layer on the IR reflecting metallic layer by means of a passivation process with oxgen on the IR reflecting metallic layer; (d) forming an absorbant structure in the UV-VIS range upon said second anti-diffusion barrier layer and (e) depositing an anti-reflecting dielectric layer in the UV-VIS range on the absorbant structure in the UV-VIS range, by means of the depositing at least one metal, selected from a group consisting of silicon, aluminium and chromium, as well as any combination thereof.

The formation of the absorbent structure in the UV-VIS range may be carried out in two different ways. The first consists of successively depositing films formed by at least one metal selected from a group consisting of silicon, aluminium and chromium, as well as any combination thereof, by means of a vapour stage deposition technique in nitrogen atmosphere, as well as a technique in which films of at least one metal selected from a group formed by Pt, Cr, Mo, W, Zr, Nb, Ta, Pd and W, in addition to any combination thereof, are deposited in vapour stage in inert atmosphere. The second consists in a simultaneous deposition process by means of a vapour stage deposition technique in nitrogen atmosphere, in order to form a homogenous layer formed by the same elements as those cited above.

Finally, the use of a coating according to that described, in tubes intended to be fitted in parabolic thermal solar energy collectors, as well as in glass or metallic tubes for solar collectors intended for other applications, also forms an additional object of the present invention.

### BRIEF DESCRIPTION OF THE DRAWINGS

**Fig 1** is an overview of the cross-section of a coating as described in the present invention on a substrate.
**Fig 2** shows the reflectance value obtained with the coating shown in example 1, together with the solar radiation spectrum collected on the ground surface and the ideal emission from a body at a temperature of 550°C.
**Fig 3** shows the reflectance value obtained with the coating shown in example 2, together with the solar radiation spectrum collected on the ground surface and the ideal emission of a body at a temperature of 450°C.
**Fig 4** shows the reflectance value obtained with the coating shown in example 3, together with the solar radiation spectrum collected on the ground surface and the ideal emission of a body at a temperature of 600°C.

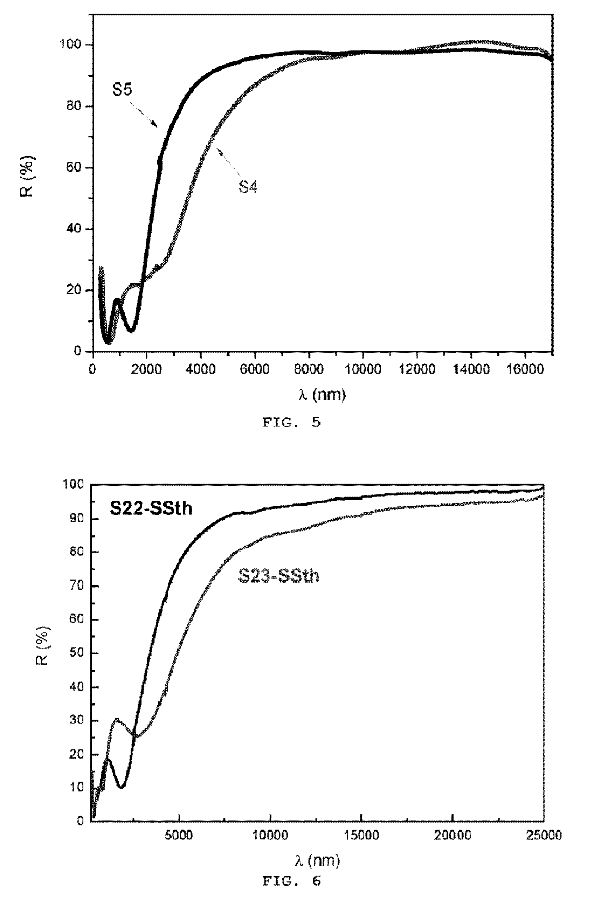

**Fig 5** shows the reflectance value obtained with the coating shown in example 2 (S4), in comparison to the reflectance obtained by a coating in which the second anti-diffusion barrier layer has been obtained by means of passivation with oxygen of the IR reflecting metallic layer, made of silver (S5).
**Fig 6** shows the reflectance value obtained with the coating, wherein the second anti-diffusion barrier layer has been obtained by means of passivation with oxygen of the IR reflecting metallic layer (S22), in comparison to a coating wherein, rather than passivation of the silver layer, a small layer of between 3 and 5 nm in thickness of silicon oxide has been deposited as a barrier layer (S23).

In the figures described above, the numerical references correspond to the following parts and elements:
(1) Substrate
(2) First anti-diffusion barrier layer
(3) IR reflecting metallic layer
(4) Second anti-diffusion barrier layer
(5) First film (of the absorbent structure in the UV-VIS range)
(6) Second film (of the absorbent structure in the UV-VIS range)
(7) Anti-reflecting dielectric layer in the UV-VIS range.

### DETAILED DESCRIPTION OF THE INVENTION

Below, a preferred embodiment of the invention is described, with reference to the figures which accompany the same. In this specific embodiment, the coating object of the present invention is applied to the metallic tubes intended to be placed in parabolic collectors. These tubes comprise a fluid which transports the heat collected inside them to a turbine in order to convert the thermal energy into electric energy.

In this way, in a preferred embodiment of the invention, the selective coating is characterised in that it comprises:
- a **first anti-diffusion barrier layer** (2) of at least one oxide of the chemical elements that form the substrate, wherein said layer is formed by thermal oxidation of the surface layer of the tube or substrate (1) upon which the coating is deposited;
- an **IR reflecting metallic layer** (3) formed by a metallic element selected from the group formed by Au, Ag, Al, Cu, Ti and Pt, as well as any combination thereof,
- a **second anti-diffusion barrier layer** (4) formed by the controlled oxidation of the IR reflecting metallic layer (3),
- an **absorbent structure in the UV-VIS range** deposited on the second anti-diffusion barrier layer (4) formed by a first film (5) and a second film (6) of a cermet with different concentrations of a metal selected from a group formed by Pt, Cr, Mo, W, Zr, Nb, Ta and Pd or any alloy thereof and a ceramic comprising a nitride of a metal selected from aluminium, silicon and chromium or a mix of the same and, finally,
- an **anti-reflecting dielectric layer in the UV-VIS range** (7), formed by a nitride of at least one metal selected from a group consisting of silicon, aluminium and chromium, as well as any combination thereof.

The process described below produces a number of coatings which give rise to absorptivity values of between 0.90 and 0.93 and emissivity values of between 0.03 and 0.06, which are stable following a thermal treatment in vacuum at 600°C.

The tube used as a support (1) should preferably have, in the case of the steel, a surface roughness of less than 1 µm. Firstly, an oxidation treatment in open air is carried out at a temperature of at least 600°C over a period of at least half an hour. In this process, a layer of oxide which is between 10 and 200 nm thick grows, the same acting as a **first anti-diffusion barrier layer** (2), likewise reducing the surface roughness of the substrate (1) and thus improving the optical properties of the **IR reflecting metallic layer** (3) or IR mirror deposited on this layer.

The tube is then introduced into a vacuum chamber with the aim of depositing the subsequent layers that form the coating by means of a vapour stage deposition technique, such as sputtering or sputtering. A suitable residual vacuum should preferably have a pressure of less than 1 x 10⁻⁴ mbar.

The **IR reflecting metallic layer** (3) is formed by depositing one of the metals from the gold, silver, platinum, aluminium, copper or titanium group by means of sputtering, preferably being silver. This layer is deposited in an argon atmosphere at a pressure of between 1x10⁻³ mbar and 1 mbar, preferably between 5x10⁻³ mbar and 1x10⁻² mbar, in order to achieve a thickness of between 10 nm and 500 nm and preferably between 100 nm and 250 nm when the metal is silver.

The **second anti-diffusion barrier layer** (4) is obtained by means of the passivation of the IR reflecting metallic layer (3), with the aim of inhibiting the reactivity linked to a metallic layer, upon which a new film should subsequently be deposited. In order to achieve this aim, oxygen is made to flow in the vacuum chamber at a partial pressure of 1 x 10⁻⁴ mbar and 10³ mbar, preferably at 5 x 10⁻² mbar, until a layer formed by oxygen is achieved and the metal forming the IR reflecting layers, the thickness of which ranges between 0.2 nm and 20 nm, a preferred thickness being less than or equal to 2nm.

The **absorbent structure in the UV-VIS range** forms the layer which absorbs visible light and is formed by at least a first film (5) and a second film (6) of cermet with different concentrations of a metal selected from the group consisting of Pt, Cr, Mo, W, Zr, Nb, Ta and Pd group or any alloy thereof as well as the ceramic, which comprises an oxygen-free nitride of a metal selected from aluminium, silicon, chromium or a mixture thereof. Both films may be prepared in two different ways. In one of these ways, the cermet is deposited in multiple layers, as a result of the sequential pulverisation of the metal from the Pt, Cr, Mo, W, Zr, Nb, Ta and Pd group, by means of sputtering with argon and of the metal from the aluminium, silicon or chromium group by means of sputtering, which reacts with argon and nitrogen to form the corresponding nitride. The other preparation method is by means of simultaneously depositing a metal from the Pt, Mo, W, Zr, Nb, Ta and Pd group and another metal from the aluminium, silicon or chromium group, by means of reactive sputtering with nitrogen. Even in the same environmental nitrogen conditions, the different chemical characteristics of both groups of metals make it possible for the nitride corresponding to the metals in the second group to be formed and therefore not the possible nitrides of the first group, which is why a cermet formed by metal and a nitride of the second group of metals is deposited by means of co-sputtering. As this nitride is being deposited, the partial nitrogen pressure in the chamber should be between 1 x 10⁻⁵ mbar and 1 mbar and more specifically, between 4 x 10⁻³ mbar and 1 x 10⁻¹ mbar and the partial oxygen pressure should be less than 1 x 10⁻⁴ mbar so that the metal from the aluminium, silicon or chromium group deposited reacts with the nitrogen to form a layer of AlₓN_{y}, SiₓN_{y} or CrₓN_{y}, with a y/x ratio comprised between 1 and 2 and preferably between 1.2 and 1.4, where a silicon nitride is concerned.

The composition (or metallic fraction of the cermet) of each one of the films that form the absorbent structure is controlled by means of the relative average thicknesses (in this case of the multiple layers) or by means of the relative strengths applied to the cathodes (in this case of co-sputtering) of the deposits of the metal from the Pt, Cr, Mo, W, Zr, Nb, Ta Pd and W group and of the nitride of the metals from the aluminium, silicon or chromium group. With the aim of the film forming a cermet, in the event of preparing multiple layers, the metal deposits should be between 0.1 nm and 10 nm thick, whilst the nitride should be between 1 nm and 50 nm thick, no limitations existing in the case of co-sputtering.

A number of good absorptivity values are obtained when the first film (5) (which is closest to the **IR reflecting metallic layer** (3)) has a metallic fraction which is between 10 % and 60 % by volume and the second film (6) has a metallic fraction between 5 % and 50 %. In a preferred embodiment, wherein the cermet is molybdenum and silicon nitride, the metallic fractions in volume of the same are preferably comprised between 20 % and 50 % for the first film (5) and between 10 % and 30 % for the second film (6). Moreover, each one of the films may be between 5 nm and 250 nm thick and preferably between 10 nm and 100 nm thick. More preferably still, these thicknesses should be between 15 nm and 50 nm for high temperature applications, with the aim of reducing the emissivity of the coating.

The absorbent structure in the UV-VIS range should preferably be between 10 nm and 500 nm thick.

The **anti-reflection dielectric layer in the VIS range** (7) aims to reflect the least light intensity reaching the absorbent layer, which is why it is referred to as an anti-reflective layer. In the present invention, this layer is formed by means of depositing one of the metals from the aluminium, silicon or chromium group or alloys thereof, by means of sputtering with partial nitrogen pressure of between 1 x 10⁻⁵ mbar and 1 mbar and a partial oxygen pressure of less than 1 x 10⁻⁴ mbar, in order to form the nitrides thereof and more specifically between 4 x 10⁻³ mbar and 1 x 10⁻² mbar, which is why the metal deposited from the aluminium, silicon or chromium group reacts with the nitrogen to form a layer of AlₓN_{y}, SiₓN_{y} or CrₓN_{y}, with a y/x ratio of between 1 and 2 and preferably between 1.2 and 1.4. This layer is between 10 nm and 500 nm thick and preferably between 20 nm and 100 nm thick.

With the aim of characterising the optical properties, the preferred embodiment of the coatings deposited on steel are heated in a vacuum oven at approximately 1 x 10⁻⁴ mbar.

Following this process, the samples were spectrophotometrically characterised, showing absorptivity values of between 0.90 and 0.93 for a direct solar spectrum referenced as 1.5 AM, within a wavelength range of between 300 nm and 1000 nm.

Thermal emissivity was firstly measured at 82 °C by means of an emissometer, which performs a complete measurement in the range of 3-30 µm, the uncertainty of which is ± 0.01, values of between 0.03 and 0.06 being obtained. Secondly, the optical reflectivity was characterised in the infrared range from 1 µm to 30 µm, which makes it possible to estimate the thermal emissivity at any temperature based on said reflectivity and the emission curve of an ideal backbody emitter at said operational temperature. In this way, values of between 0.03 and 0.06 have been obtained for a temperature of 82 °C, values of 0.03 and 0.07 for 450 °C and 0.04 to 0.10 for 550 °C.

These emissivity values represent very low thermal radiation energy losses, owing to the fact that the selective coating described herein facilitates the tuning, at the desired wavelength, of the step between the low reflectivity in the VIS range and the high reflectivity in the IR range, which, from another point of view, makes it possible to design the coating according to the operational temperature of the collector tube. This fact is also responsible for the low absorptivity shown by the coating owing to the optimisation thereof to obtain low emissivity upon operating at high temperatures. Likewise, it must furthermore be noted that the absorptivity and emissivity values obtained are competitive owing to the abrupt transition between the VIS and IR regions of the reflectivity curve, which is physically related to the efficiency of the second anti-diffusion barrier layer (4). Said efficiency is possible owing to the different chemical properties of the barrier layer, which is an oxide, and of the ceramic that forms the cermet of the absorbent structure, which is an oxygen-free nitride.

Even when small variations exist in the coating described herein and are subjected to subsequent analysis, this coating proves useful in applications for producing solar radiation absorbing tubes, with a roughness Ra preferably comprised between 100 nm and 500 nm made of glass or a metal selected from any kind of steel, copper, zinc or aluminium or any combination thereof.

Moreover, as a result of the end optical characteristics of the coating, it is possible to acquire the same at the chosen operational temperature. Therefore, according to the nature of the layers and thickness of the same, the transition between the UV-VIS and IR regions may be conveniently moved for use thereof from room temperature up to 600 °C, with the aim of improving the selectivity relationship of the same.

### EXAMPLE EMBODIMENTS OF THE INVENTION

The examples described below should not be considered to limit the scope of the invention. Conversely, the present invention encompasses coating all the alternatives, variations, amendments and equivalents that may be included within the spirit and scope of the object of the invention.

### Example 1

The AISI-321 steel, taken as a substrate (1) which has been polished to a roughness Ra of 200 nm, is brought to the temperature of 600 °C in open air over a period of half an hour in order to develop a first anti-diffusion barrier layer (2), made of mixed iron and chromium oxide, which acts as a barrier layer between the steel and the **IR reflecting metallic layer** (3) or IR mirror. The roughness of the substrate with the oxide layer is reduced to values of 60 - 80 nm, which implies improved optical properties of the IR mirror deposited on said oxide.

Subsequently, once cooled, it is introduced into a chamber with vacuum better than 2x10⁻⁶ mbar, with the aim of depositing layers by means of vapour stage deposition techniques.

An **IR reflecting metallic layer** (3) made of 200 nm of silver is deposited, with the aim of serving as an IR mirror, which is effectuated by means of sputtering with argon gas. Once said layer has ended, the existing argon chamber is cleaned and an oxygen current is passed through at a pressure of 5 x 10⁻² mbar for 5 minutes, with the aim of passivating the silver and thus achieving a **second anti-diffusion barrier layer** (4), which consists of a layer rich in silver and oxygen.

Once the IR mirror has been established, it is possible to proceed to deposit the visible radiation absorbent layer. In this example, a double cermet has been deposited; the first cermet film (5) deposited in this example has a metallic fraction with 40% volume and the second cermet film (6) has a metal fraction with equal 20% volume.

In the first cermet film (5), three bi-layers have been deposited successively, each one of them formed by 3 nm, of silicon nitride and 2nm of molybdenum. The silicon nitride film was firstly deposited by means of silicon sputtering in nitrogen atmosphere, in order to achieve the reaction, then the molybdenum sputtering was carried out by means of inert argon gas.

In the second cermet film (6) four bi-layers were successively deposited, each one of which is formed by 4 nm films of silicon nitride and 1 nm films of molybdenum. The silicon nitride film was firstly deposited by means of silicon sputtering in nitrogen atmosphere in order to achieve the reaction, followed by the molybdenum sputtering by means of inert argon gas.

Subsequently, **an anti-reflecting dielectric layer in the UV-VIS** range (7) which is 27 nm thick made of silicon nitride was deposited by means of silicon sputtering in nitrogen atmosphere in order to achieve full nitridation thereof.

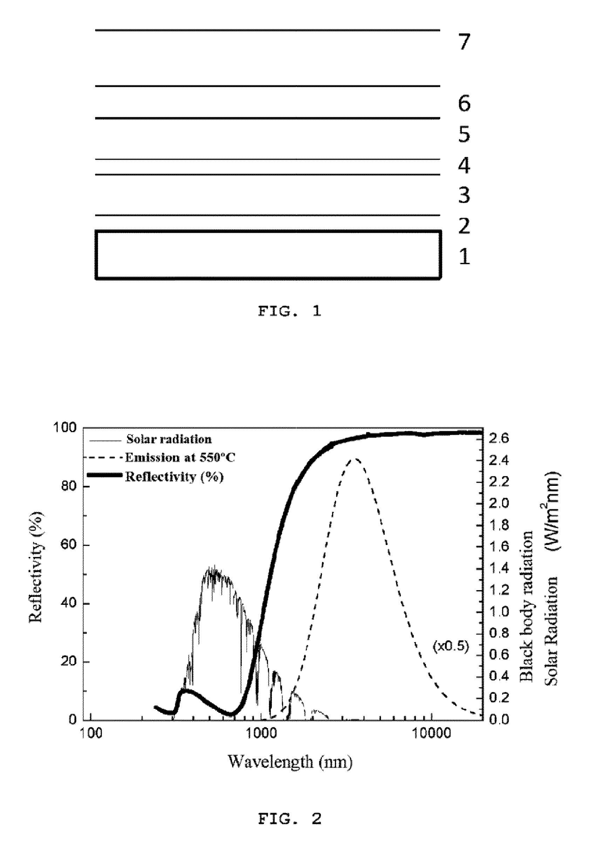

This coating has been optically characterised with the aim of determining solar absorptivity and thermal emissivity. Therefore, a spectroscopic study has been carried out in the UV-VIS-IR range, which covers the entire solar spectrum range and the wavelength range emitted by bodies at typical operational temperatures in solar collectors. In Fig. 2, the reflectance obtained for a coating such as that described previously is represented, wherein, in comparison, the solar spectrum has also been represented, in addition to the emission characteristic of a black body at a temperature of 550 °C.

The absorptivity value obtained when the calculation is made between 300 nm and 1000 nm is 0.93. Furthermore, the emissivity value is 0.03 (evaluated between 1 µm and 30 µm), which gives a selectivity factor of 31. The emissivity value calculated at 550 °C is 0.04, which results in a selectivity factor of 23.

### Example 2

The AISI-321 steel, taken as a substrate (1) polished to a roughness Ra of 200 nm is brought to the temperature of 600 °C in open air over half an hour, in order to develop a **first anti-diffusion barrier layer** (2) of mixed iron and chromium oxide, which acts as a barrier layer between the steel and the **IR reflecting metallic layer** (3) or IR mirror.

Subsequently, once cooled, it is introduced into a chamber with a vacuum better than 2x10⁻⁶ mbar, with the aim of depositing layers using vapour stage deposition techniques.

An **IR reflecting metallic layer** (3) made of 200 nm of silver is deposited, with the aim of serving as an IR mirror, which is carried out by means of sputtering with argon gas. Once said layer has been finished, the existing argon chamber is cleaned and a an oxygen current is made to pass through at a pressure of 5x10⁻² mbar over 5 minutes, with the aim of passivating the silver and thus achieving a **second anti-diffusion barrier layer** (4) consisting of a layer rich in silver and oxygen.

Once the IR mirror has been established, it is possible to go on to deposit the layer that absorbs visible radiation, a double cermet having been deposited in this example. The first cermet film (5) deposited in this example has a metallic fraction 40% by volume and the second cermet film (6) has a metal fraction of equal 20% volume.

In the first cermet film (5), ten bi-layers have been successively deposited, each one of which is formed by 3nm of silicon nitride and 2 nm of molybdenum. The silicon nitride film was firstly deposited by means of silicon sputtering in nitrogen atmosphere, in order to achieve the reaction, followed by the sputtering of molybdenum by means of inert argon gas.

In the second cermet film (6), ten bi-layers have been successively deposited, each one of which is formed by 4 nm films of silicon nitride and 1 nm of molybdenum. The silicon nitride film was firstly deposited by means of silicon sputtering in nitrogen atmosphere in order to achieve the reaction, followed by the sputtering of molybdenum by means of inert argon gas.

Subsequently, an **anti-reflecting dielectric layer in the UV-VIS range** (7), which is 80 nm thick and made of silicon nitride, was deposited by means of silicon sputtering in nitrogen atmosphere, in order to achieve full nitridation thereof.

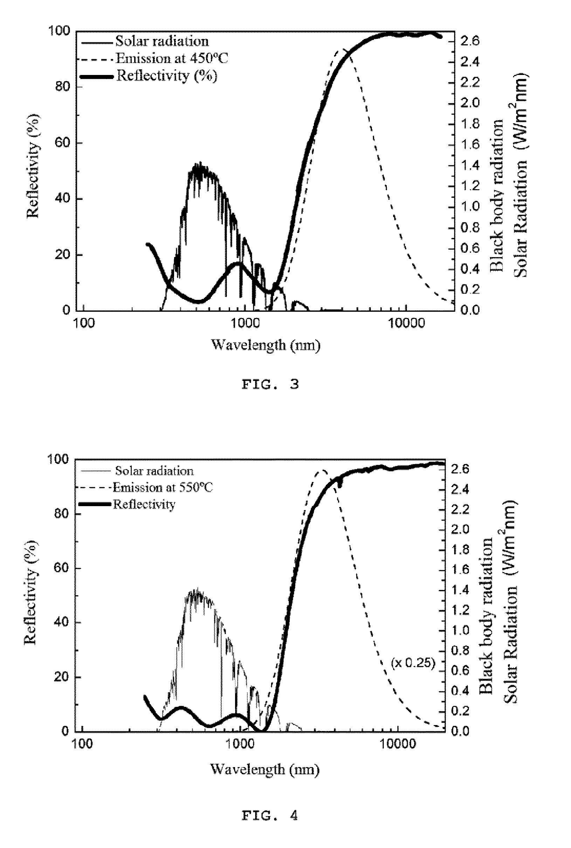

This coating has been characterised with the aim of determining solar absorptivity and thermal emissivity. Therefore, a spectroscopic study has been carried out in the UV-VIS-IR range, which covers the entire solar spectrum rangeand the range of wavelengths emitted by bodies at typical operational temperatures in solar collectors. In Fig. 3, the reflectance obtained for a coating such as that described previously is represented, the solar spectrum and the emission characteristic of a black body at a temperature of 450 °C having also been represented for comparative purposes.

The value obtained for the absorptivity when calculated between 300 nm and 1000 nm is 0.91. Furthermore, the emissivity value is 0.05 (evaluated between 1 µm, and 30 µm), which results in a selectivity factor of 18. The emissivity value calculated at 450 °C is 0.08, which results in a selectivity factor of 11.4.

### Example 3

The AISI-321 steel, taken as a substrate (1) polished to a roughness Ra of 200 nm is brought to a temperature of 600 °C in open air for half an hour in order to develop a **first anti-diffusion barrier layer** (2) made of mixed iron and chromium oxide, which acts as a barrier between the steel and the **IR** reflecting **metallic** layer (3) or IR mirror.

Subsequently, once cooled, it is introduced into a chamber with a vacuum greater than 2 x 10⁻⁶ mbar, in order to deposit layers by means of vapour stage deposit techniques.

An IR reflecting **metallic** layer (3) of 200 nm of silver is deposited with the aim of serving as an IR mirror, which is carried out my means of sputtering with argon gas. Once said layer has ended, the existing argon chamber is cleaned and an oxygen current is made to pass through at a pressure of 5 x 10⁻² mbar for 5 minutes, with the aim of passivating the silver and thus achieving a second anti-diffusion barrier layer (4), consisting of a layer rich in silver and oxygen.

Once the IR mirror has been stabilised, the layer which absorbs visible radiation may be deposited. In this example, a double cermet has been deposited. The first cermet film (5) deposited has a metallic fraction with a 35 % volume and the second cermet film (6) has a metal fraction with an equal 20 % volume.

A 50 nm layer formed by molybdenum and silicon nitride has been deposited on the first cermet film (5) by means of co-sputtering, with an atomic molybdenum content of 35%. Molybdenum and silicon are simultaneously deposited by means of sputtering in nitrogen atmosphere.

A 50 nm layer formed by molybdenum and silicon nitride with an atomic molybdenum content of 20% has been deposited on the second cermet film (6) by means of co-sputtering. Molybdenum and silicon are simultaneously deposited by means of sputtering in nitrogen atmosphere.

Subsequently, a 60 nm thick **anti-reflecting dielectric layer in the UV-VIS range** (7) made of silicon was deposited by means of silicon sputtering in nitrogen atmosphere.

This coating has been characterised with the aim of determining solar absorptivity and thermal emissivity. Therefore, a spectroscopic study has been carried out in the UV-VIS-IR range, which covers the entire solar spectrum range and also the range of wavelengths emitted by bodies at typical operational temperatures in solar collectors. In Fig 4, the reflectance obtained for a coating such as that described above, in which, for comparative purposes, the solar spectrum and the emission characteristic of a black body at a temperature of 600° C have also been represented.

The absorptivity value obtained when the calculation is made between 300 nm and 1700 nm is 0.95. Furthermore, the emissivity value is 0.03 (evaluated between 1 µm and 30 µm), which gives a selectivity factor of 18. The emissivity value calculated at 600 °C is 0.12, which implies a selectivity factor of 7.9 at this temperature.

### Example 4

In this example, a comparison was made between two selective coatings (S4 and S5). The S4 coating corresponds to a coating obtained according to the method described in example 2 and the S5 coating corresponds to the same S4 coating but with the silver layer having been passivated with an oxygen flow.

Table 1 below shows the results of the comparison between both coatings.

**Table 1**

| **Rec.** | **Layers deposited** | **Thickness (nm)** | **Structure** | |
|---|---|---|---|---|
| | Ag | 250 | | |
| **S4** | Si₃N₄/ Mo HMVF | 53 | f_{Mo}=40; [Si₃N_{4 3nm}/ Mo ₂ₙₘ] ₁₀ + Si₃ N_{4 3nm} | |
| | Si₃N₄ / Mo LMVF | 54 | f_{Mo}=20; [Si₃N_{4 4nm}/ Mo ₁ₙₘ] ₁₀ + Si₃ N_{4 4nm} | α = 0.93 |
| | | | | ε = 0.11 |
| | Si₃N₄ | 80 | | |
| | Ag+ pasiv O₂ | 230 | | |
| **S5** | Si₃N₄/Mo HMVF | 53 | f_{Mo}=40; [Si₃N_{4 3nm}/ Mo ₂ₙₘ] ₁₀ + Si₃ N_{4 3nm} | |
| | Si₃N₄/ Mo LMVF | 54 | f_{Mo}=20; [Si₃N_{4 4nm}/ Mo ₁ₙₘ] ₁₀ + Si₃ N_{4 4nm} | α = 0.91 |
| | | | | ε = 0.05 |
| | Si₃N₄ | 80 | | |

### Example 5

In this example, a comparison was made between an S22 coating in which the second anti-diffusion barrier layer was obtained by means of passivation with oxygen of the IR reflecting metallic layer and a coating in which rather than passivating the silver layer, a small layer between 3 and 5 nm thick of silicon oxide was deposited as a barrier layer, in attempt to improve adherence.

Although the emissivity value of the S22 sample is not as good as that of S5 (owing to the thickness of the latter layer of Si₃N₄ not being optimal), it is possible to observe that introducing this small SiO₂ layer changes the emission value strongly.

Table 2 below contains the results of the comparison between both coatings.

**Table 2**

| **Rec.** | **Layers deposited** | **Thickness (nm)** | **Structure** | |
|---|---|---|---|---|
| | Ag (RF) + pasiv | 220 | | |
| **S22** | O₂ | | | |
| | Si₃N₄/ Mo-HMVF | 53 | f_{Mo}=40; [Si₃N_{4 3nm}/ Mo 2nm]₁₀ + Si₃ N_{4 3nm} | α = 0.90 |
| | Si₃N₄ / Mo LMVF | 54 | f_{Mo}=20; [Sᵢ3N_{4 4nm}/ Mo ₁ₙₘ] ₁₀ + Si₃ N_{4 4nm} | ε = 0.09 |
| | Si₃N₄ | 35 | | |
| | Ag (RF) | 220 | Not Passivized | |
| **S23** | SiO₂ | 3-5 nm | | |
| | Si₃N₄/ Mo - HMVF | 53 | f_{Mo}=40; [Si₃N_{4 3nm}/ Mo 2nm]₁₀ + Si₃ N_{4 3nm} | α = 0.92 |
| | Si₃N₄/ Mo - LMVF | 54 | f_{Mo}=20; [Si₃N_{4 4nm}/ Mo ₁ₙₘ] ₁₀ + Si₃ N_{4 4nm} | ε = 0.20 |
| | Si₃N₄ | 35 | | |

## Claims

1. Selective absorbing coating for visible and infrared radiation, **characterised in that** it comprises:
(a) at least one first anti-diffusion barrier layer (2) obtained by means of an oxidisation process on the surface layer of the substrate (1) upon which the coating is deposited;
(b) an IR reflecting metallic layer (3) located on said first anti-diffusion barrier layer (2), which comprises at least one metallic element selected from a group consisting of Au, Ag, Al, Cu, Ti and Pt, as well as any combination thereof;
(c) at least a second anti-diffusion barrier layer (4) located on the IR reflecting metallic layer (3), wherein said second anti-diffusion barrier layer (4) is formed by at least one metallic oxide obtained by means of a passivation process with oxygen on the IR reflecting metallic layer (3);
(d) an absorbent structure in the UV-VIS range, located on said second anti-diffusion barrier layer (4), comprising at least a first film (5) and a second film (6) made of cermet, wherein said cermet comprises a metallic fraction of at least one metal selected from a group consisting of Pt, Cr, Mo, W, Zr, Nb, Ta and Pd or any alloy thereof and a ceramic comprising an oxygen-free nitride of a metal selected from aluminium, silicone and chromium, as well as any combination thereof; and,
(e) an anti-reflecting dielectric layer in the UV-VIS range (7) located on the absorbent structure in the UV-VIS range, which comprises a nitrite of at least one metal selected from a group formed by silicone, aluminium and chromium, as well as any combination thereof.

2. Coating according to claim 1, wherein the substrate (1) upon which the coating is located is a glass or metal selected from any kind of steel, copper, zinc or aluminium or any alloy thereof.

3. Coating according to claim 1 or 2, wherein the first anti-diffusion barrier layer (2) comprises at least one oxide of at least one chemical element forming the substrate (1).

4. Coating according to any one of the previous claims, wherein the IR reflecting metallic layer (3) is between 10 nm and 500 nm thick.

5. Coating according to any one of the previous claims, wherein the absorbent structure in the UV-VIS range comprises at least one cermet which is between 10 nm and 500 nm thick.

6. Coating according to claim 5, wherein the cermet comprises molybdenum and silicone nitrite, with a value of the metallic fraction by volume of between 5% and 60%.

7. Method for obtaining a coating according to any one of the claims 1 to 6, **characterised in that** it comprises:
(a) obtaining at least a first anti-diffusion barrier layer (2) by means of oxidising the surface layer of the substrate (1), upon which the coating is deposited;
(b) depositing an IR reflecting metallic layer (3) on said first anti-diffusion barrier layer (2), wherein said IR reflecting metallic layer (3) comprises at least one metallic element selected from a group consisting of Au, Ag, Al, Cu, Ti and Pt, in addition to any combination thereof;
(c) obtaining at least a second anti-diffusion barrier layer (4) on the IR reflecting metallic layer (3) by means of a passivation process with oxygen of the IR reflecting metallic layer (3);
(d) forming an absorbent structure in the UV-VIS range on said second anti-diffusion barrier layer (4) and
(e) depositing an anti-reflecting dielectric layer in the UV-VIS range (7) onto the absorbent structure in the UV-VIS range by means of depositing at least one metal selected from a group consisting of silicone, aluminium and chromium, in addition to any combination thereof.

8. Method according to claim 7, wherein the absorbent structure in the UV-VIS range is formed on said second anti-diffusion barrier layer (4) by means of a process in which films formed by at least one metal selected from a group consisting of silicone, aluminium and chromium, in addition to any combination thereof are successively deposited, by means of a vapour stage deposition technique in a nitrogen atmosphere, as well as by means of a vapour stage deposition technique in an inert atmosphere of films made of at least one metal selected from a group consisting of Pt, Cr, Mo, W, Zr, Nb, Ta, Pd and W, in addition to any combination thereof.

9. Method according to claim 7 or 8, wherein the absorbent structure in the UV-VIS range mentioned in step (d) is formed by means of preparing a cermet by sequentially depositing a ceramic and at least one metal and repeating the process until the desired thickness is attained.

10. Method according to any one of the claims 7 to 9, where the anti-reflecting dielectric layer in the UV-VIS range (7) included in step (e) is deposited by means of a vapour stage deposition technique in a reactive atmosphere, with a partial nitrogen pressure of between 1x10⁻⁵ mbar and 1 mbar and a partial oxygen pressure of less than 1x10⁻⁴ mbar in order to form an oxygen-free nitride.

11. Method according to claim 10, wherein when the metal deposited in step (e) is silicone, the reactive cathode pulverisation is carried out with a partial nitrogen pressure of between 1x10⁻³ mbar and 1 mbar, forming a layer of SiₓN_{y}, with a y/x ratio of between 1.2 and 1.4, where said layer is between 10 nm and 500 nm thick.

12. Method according to any one of the claims 7 to 11, wherein the coating is applied to the external surface of a tube with a roughness Ra comprised between 100 nm and 500 nm made of glass or metal selected from any kind of steel, copper, zinc and aluminium or any combination thereof.

13. Method according to any of the claims 7 to 12, wherein the first anti-diffusion barrier layer (2) is between 10 and 200 nm thick.

14. Method according to any of the claims 7 to 13, wherein the IR reflecting metallic layer (3) is between 10 nm and 500 nm thick, being deposited by means of a vapour stage deposition technique.

15. Method according to any one of the claims 7 to 14, wherein the second anti-diffusion barrier layer (4) is less than or equal to 2 nm thick.

16. Method according to any one of the claims 7 to 15, wherein the absorbent structure in the UV-VIS range comprises depositing at least one cermet by means of a vapour stage deposition technique, this cermet being between 10 and 500 nm thick, with a metallic fraction value by volume comprised between 5% and 60%.

17. Method according to claim 16, wherein the metal selected from silicone, aluminium and chromium comprised by the absorbent structure in the UV-VIS range and the anti-reflecting dielectric layer (7) is deposited when nitrogen is supplied in an oxygen-free environment, corresponding to a partial oxygen pressure of less than 1x10⁻⁴ mbar.

18. Use of a coating according to any of the claims 1 to 6, to be deposited on glass or metal supports used in thermal solar energy collectors.

19. Use of a coating according to claim 18, wherein these supports consist of glass tubes or metal tubes selected from copper, zinc and aluminium or any combination thereof, through which a fluid circulates at a temperature of between room temperature and 300°C.

20. Use of a coating according to claim 18, wherein said supports consist of steel tubes and where the thermal solar energy collectors consist of thermal solar energy parabolic collectors, in which the steel tube is in vacuum conditions with a partial oxygen pressure of less than 1x10⁻¹ mbar.

21. Use of a coating according to claim 20, **characterised in that** it comprises a fluid circulating inside said steel tubes at a temperature of between 300°C and 600°C.
